# EUROPÄISCHE PATENTANMELDUNG

(11) **EP 2 418 044 A1**
(43) Veröffentlichungstag der Anmeldung: **15.02.2012**
(21) Anmeldenummer: 10172397.1
(22) Anmeldetag: 10.08.2010
(51) Int. Cl.: B23P 25/00

(54) **Durch induktive Erwärmung gestützte Materialbearbeitung, insbesondere Zerspanen von Titanlegierungen oder Materialien mit vergleichbar geringem Wärmeleitfaktor**

(71) Anmelder: Technische Universität Darmstadt, 64283 Darmstadt (DE)
(72) Erfinder: Prof. Dr. Abele, Eberhard, 77815, Bühl (DE); Dipl.-Wirtsch.-Ing. Hölscher, Roland, 64283, Darmstadt (DE)
(74) Vertreter: Stumpf, Peter

(57) **Zusammenfassung**

Die vorliegende Erfindung betrifft ein neuartiges Verfahren und eine neuartige Vorrichtung zur Zerspanung von Materialien mit einer den bekannten Titanlegierungen gleichen oder geringeren Wärmeleitfähigkeit.

Die vorliegende Erfindung schlägt dazu die Erhitzung von Teilen des Werkstücks kurz vor der Bearbeitung durch elektromagnetische Induktion, insbesondere auch bei verschiedenen Frequenzen und durch mehrere Induktoren vor.

## Beschreibung

### Erfindung betreffend induktionsgestützte Materialbearbeitung, insbesondere Zerspanen von Titanlegierungen oder Materialien mit vergleichbar geringem Wärmeleitfaktor

Die vorliegende Erfindung betrifft ein neuartiges Verfahren zur Materialbearbeitung, insbesondere Zerspanen von Materialien, welche eine den bekannten Titanlegierungen ähnlich geringe oder sogar geringere Wärmeleitfähigkeit aufweisen.

Es wird vorgeschlagen durch Induktion, d.h. elektromagnetische Induktion das zu bearbeitende Werkstück-Material definiert zu erwärmen.

### Stand der Technik

Titanlegierungen bieten aus Sicht der Materialeigenschaften viele Vorteile anderen Metallen gegenüber (leicht, hohe Festigkeit, gute Korrosionseigenschaften, etc.). Haben jedoch auch Eigenschaften, welche Titanlegierungen in die Kategorie der schwer zerspanbaren Metalle, gliedern läßt. Unter anderem besitzen Titanlegierungen im Gegensatz (z.B. zu Stählen und Aluminiumlegierungen) einen extrem niedrigen Wärmeleitfaktor, so dass die entstehende Prozesshitze nicht in das Bauteil eindringen kann (somit keine Materialentfestigung) und nicht über den Prozess abgeführt werden kann (Prozessüberhitzung).

Um eine Prozessüberhitzung zu vermeiden wir bis heute mit sehr konventionellen (moderat und langsamen gerade in Bezug auf Schnittgeschwindigkeiten) Prozessparametern gearbeitet. Hauptnachteil ist die extrem geringe Produktivität bei der Zerspanung von Titanlegierungen.

Zur Vermeidung dieses Nachteiles wurde z.B. in der DE 103 32 078 B3 vorgesehen das Verfahren zur Zerspanung von Werkstücken aus Titan-Basislegierungen so zu verändern, dass vor der eigentlichen Spanabhebung eine Erhitzung des Werkstücks in einer wasserstoffhaltigen Atmosphäre, zur Aufnahme von Wasserstoff durch das Werkstück erfolgt und danach eine Abkühlung erfolgt. Nach dem Schritt der Spanabhebung ist dann ein erneutes Erhitzen, unter Vakuum und in einer wasserstoffreien Atmoshpäre, notwendig. Dieses Verfahren ist sehr aufwendig (mehrere Schritte, 2faches Aufheizen, Explosionsschutz etc.) und dadurch mit hohen Kosten verbunden.

### Aufgabe

Es ist daher Aufgabe der Erfindung diese Nachteile im Stand der Technik durch Vorsehung eines einfachen Verfahrens und einer entsprechenden Vorrichtung, zu beseitigen.

### Lösung der Aufgabe

Diese Aufgabe wird durch das Verfahren mit den Merkmalen des Anspruchs 1 und durch die Vorrichtung gemäß Anspruch 6.

Vorteilhafte Ausführungsbeispiele werden im Folgenden beschrieben oder/und sind in den Unteransprüchen beschrieben.

Durch den Gegenstand der Erfindung soll in Zukunft die Zerspanzeit deutlich verringert werden. Das zu zerspanende Material wird kurz vor dem Zerspanprozess mittels Induktion partiell erhitzt, so dass sich die Materialeigenschaften von Titanlegierungen, wie z.B. die Festigkeit, positiv für die Zerspanung ändern und so die höhere Prozessparameter erreicht werden können.

Die Nachteile im Stand der Technik werden durch die künstliche, d.h. gesonderte, Energieeinbringung in Form von Wärme mittels Induktion in das zu bearbeitende Werkstück-Material beseitigt.

Es wurde gefunden, dass durch die erfindungsgemäße Wärmeeinbringung, sich das Material überraschenderweise derart entfestigt dass sich die Prozessparameter, wie Vorschub etc. deutlich steigern lassen. Das erfindungsgemäße Verfahren ist besonders vorteilhaft, da hiermit die Leistung, die Frequenz, sowie über die Induktorgeometrie der Wärmeeintrag so gesteuert oder auch, bei Vorsehung von Sensoren etc., geregelt werden kann, dass gezielt die Bereiche (gerade durch geeignete Wahl der Einwirktiefe, welche z.B. über die Frequenz und den so genannten Skin-Effekt beeinflussbar ist) erhitzt werden können, welche im direkten nach gelagerten Verfahren abgetragen werden. Ausdrücklich soll hier nochmals erwähnt werden, dass nur die Bereiche erhitzt werden, welche anschließend sofort spanend abgetragen werden.

Die Produktivität bei der Zerspanung von Titanbauteilen kann dadurch deutlich gesteigert werden. Durch die Implementierung der induktiven Erwärmung des Bauteilwerkstoffes lassen sich die Materialeigenschaften positiv im Hinblick auf die Zerspanbarkeit beeinflussen. Die Warmzerspanung mittels induktiver Erwärmung ermöglicht so eine Verbesserung der Zerspanleistung insbesondere von Titanlegierungen oder anderen Materialien mit ähnlich geringen oder noch geringeren Wärmeleitfähigkeiten.

Es wurden Stichversuche unternommen und diese zeigten ein großes Potential auf. Es wird mit einer Produktivitätssteigerung von min. 100 % gerechnet.

### Ausführungsbeispiele

Die folgenden Abbildungen zeigen verschiedene Ausführungsbeispiele der Anordnungen und damit herstellbaren Vorrichtungen. Es zeigen:
Abb.1: Ti-6Al-4V Eigenschaften bei unterschiedlichen Temperaturen (Quelle: Klossowski, Uwe; Laserunterstütztes Fräsen von TiAl6V4, Shaker Verlag, Aachen, 1999 (Berichte aus der Produktionstechnik; Bd. 99,27).)
Abb. 2: Versuchsaufbau
Abb.3: Induktorfläche, welche dem Bauteil zugewendet ist (Abstand 1 mm zum Werkstück)
Abb. 4: Schematische Darstellung Induktorpositionierung/Wärmeeinheit und Fräswerkzeug.

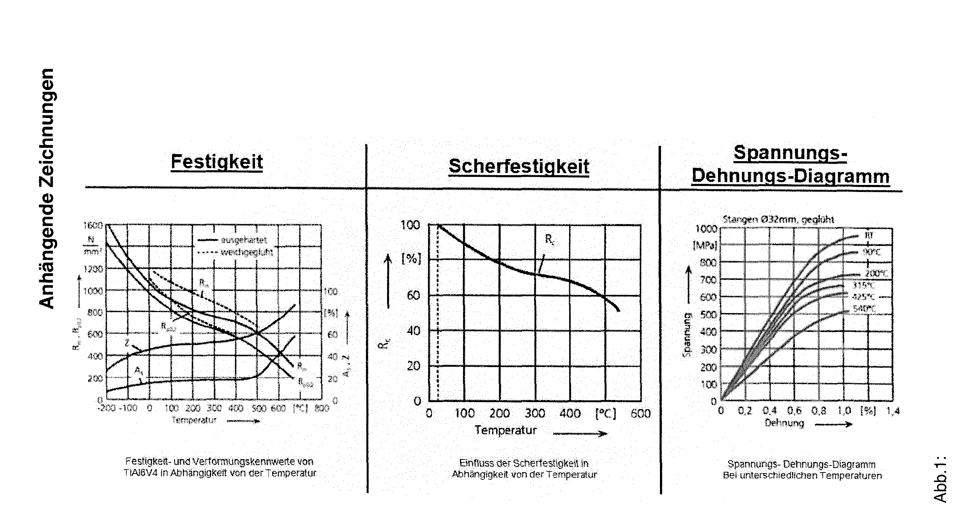

Die Erfindung stellt ein neues Verfahren zur wirtschaftlicheren Zerspanung von Titanlegierungen dar. Hier wird sich die Veränderung von Materialeigenschaften über die Temperatur zu Nutze gemacht. Abb.1 zeigt einige Materialeigenschaften von Ti-6Al-4V in Abhängigkeit von der Werkstofftemperatur. Mit zunehmender Temperatur nimmt die Festigkeit, Scherfestigkeit, E-Modul und die Neigung zur Verfestigung des Materials bei der Zerspanung ab.

Diese positiven Materialänderungen bringen auch positive prozessbezogene Effekte mit sich. Die Schnittkräfte sinken und damit nehmen die Werkzeugbelastungen ab. Der Werkzeugverschleiß sinkt und damit steigert sich die Standzeit und der Strandweg des Werkzeuges. Weiterhin verbessert sich die Spanbildung und das Zeitspanvolumen wird gesteigert. Durch die bessere Zerspanbarkeit lassen sich nun höhere Prozessparameter fahren. So zeigte sich in Stichversuchen, dass die Schnittgeschwindigkeit, im Vergleich zu konventioneller Bearbeitung (v_{c}=40 -100 m/min), auf 200 bis 300 m/min gesteigert werden konnte.

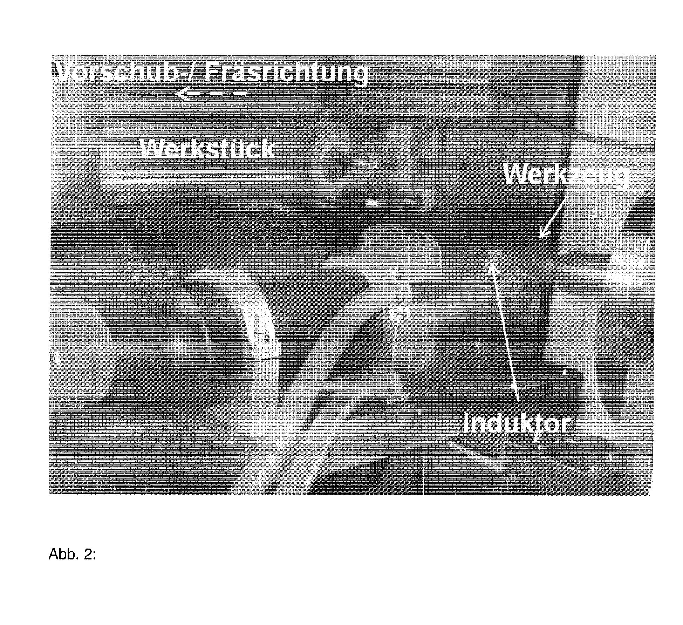

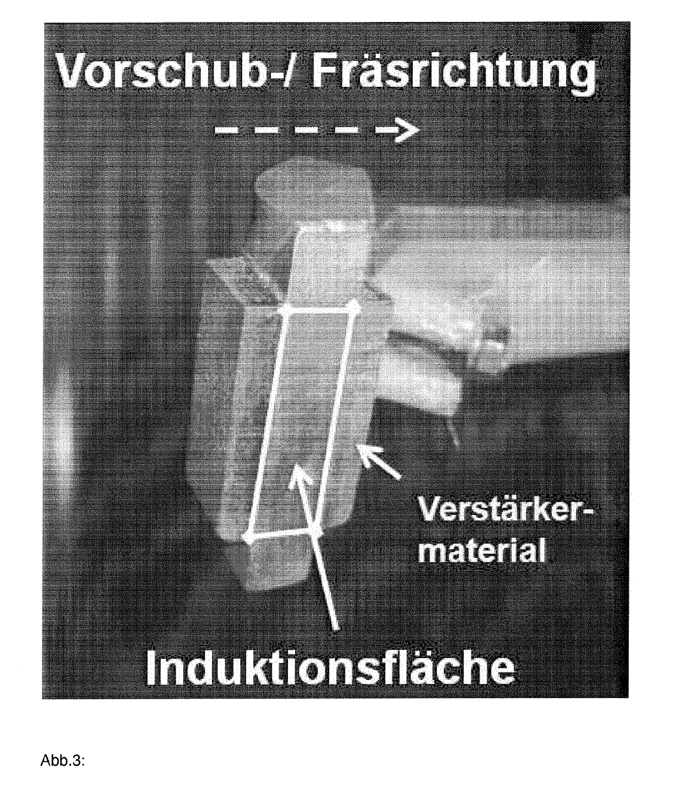

Abb. 2 zeigt den Versuchsaufbau mit dem die ersten Stichversuche unternommen wurden. Es ist der Induktor und das später rotierende Wendeschneidplattenwerkzeug zu sehen. Der Induktor fährt dem Werkzeug in Vorschubrichtung über das Werkstück vor. Der Induktor fährt im Abstand von einem Millimeter über das Werkstück und induziert einen Wirbelstrom und erhitzt somit das Werkstück. Der Mittelstromfrequenzumrichter liefert 18.000 Hz, was zu einer theoretischen und praktischen Einwirktiefe von ca. 3mm führt. Wird die Frequenz herabgesetzt sind höhere Einwirktiefen realisierbar. Erhöht man die Frequenz, werden geringere Einwirktiefen erreicht. Das folgende Werkzeug trägt (welches immer den gleichen Abstand zum Werkzeug besitzt) das erhitzte Werkzeugvolumen ab. In den ersten Versuchen haben sich Werkstücktemperaturen von 200 °C bis 600 °C bewährt. Die erfolgreichsten Zerspanversuche wurden bei Werkstücktemperaturen von 400°C bis 500°C erreicht. Die Abb. 3 zeigt die verwendete Induktorform und kennzeichnet die Breite von 20 mm, welche die Induktionsbreite kennzeichnet.

Der Induktorkörper ist etwa rechteckig und weist in der Mitte, etwa parallel zu der längeren Seite des Rechtecks, eine Abkantung um einen Winkel von ca. 45° auf. Die Dicke des Rechtecks ist ca. 20 mm. Die längere einer Seitenkante mit dieser Dicke bildet die dem Werkstück zugewandte, so genannte Induktionsfläche.

Der Induktorkörper weist, in einer vorteilhaften Ausführungsform des Induktors drei flächige Verstärker/Konzentrator-Elemente auf, welche im unteren Teil des rechteckförmigen Körpers links, rechts und dem Werkstück abgewandten Seite des Körpers so angeordnet sind, dass die Endflächen der Elemente links und rechts etwa bündig mit der Oberfläche der Induktionsfläche abschließen.

Die Verstärker-/Konzentrator-Elemente bestehen dabei aus Ferrotron® 559. Diese können aber auch aus anderen Materialien zur Magnetfeldkonzentration, d.h. Materialien, welche durch eine sehr hohe Permeabilität viele Magnetfeldlinien auf sich vereinen, bestehen.

In einer vorteilhaften Anordnung von Werkstück und Induktor, beträgt der Abstand zwischen Induktionsfläche des Induktors und Werkstück rund 1 mm, vorzugsweise 0,01 mm und ganz bevorzugt 0,001 mm.

In einer Ausführungsform des Induktors, befindet sich im Induktorkörper eine Spule, z.B. aus Kupfer, welche von Kühlmedium unter hohem Druck umströmt und abgekühlt wird. Durch Anlegen von Wechselspannung an der Spule, werden im Werkstück Wirbelströme induziert und das Werkstück wird bei ausreichender Intensität erhitzt. Die Eindringtiefe der Induktion hängt von der Höhe der Frequenz der Wechselspannung ab. Je hochfrequenter die Spannung, umso geringer die Eindringtiefe (Skin-Effekt). Der Grad der Erwärmung ist über die Stromstärke in der Spule und über die Dauer der Stromzufuhr beeinflussbar.

Diese Art der Wärmeeinbringung hat den Vorteil, dass Wärme nicht nur an die Werkstückoberfläche, sondern auch in die Werkstücktiefe geführt wird. Hiermit grenzt sich dieser Verfahren klar dem laserunterstützten Fräsen ab. Ein Laser kann immer nur eine Oberfläche erhitzten und so eine Wärmeeinbringung in der Tiefe nur über Wärmeleitung im Werkstück erreichen.

Der in Abb.3 gezeigte Versuchsaufbau gewährleistet einfache Fräsoperationen. Bei komplexeren Fünfachsfräsoperationen ist darauf zu achten, dass der Induktor und die damit vor gelagerte partielle Erhitzung des zu zerspanenden Materials dem Fräser vorläuft. Dies ist durch einen im Bearbeitungszentrum, an z.B. einem Fünfachsroboterarm relativ einfach zu implementieren.

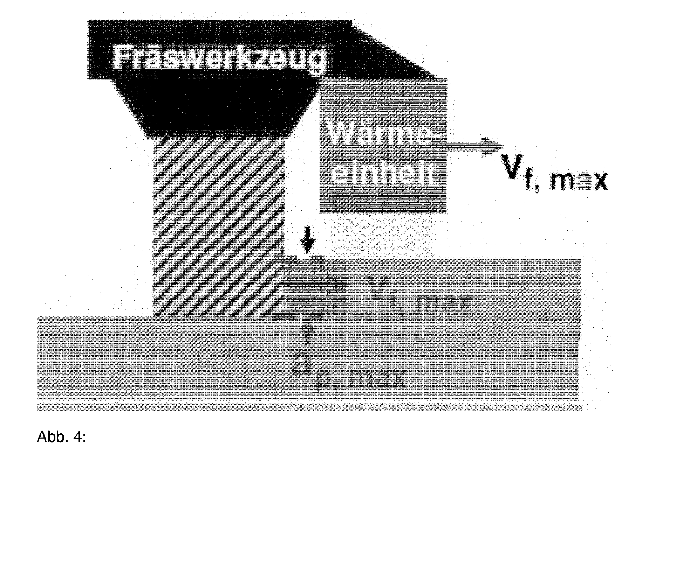

Abb. 4 zeigt eine schematische Darstellung einer erfindungsgemäßen Anordnung, bei welcher der Induktor -als Wärmeeinheit- fest mit dem Fräswerkzeug verbunden, aber diesem im Abstand von 10 mm vorgelagert und im Abstand von 1 mm zur Werkstückoberfläche angeordnet ist.

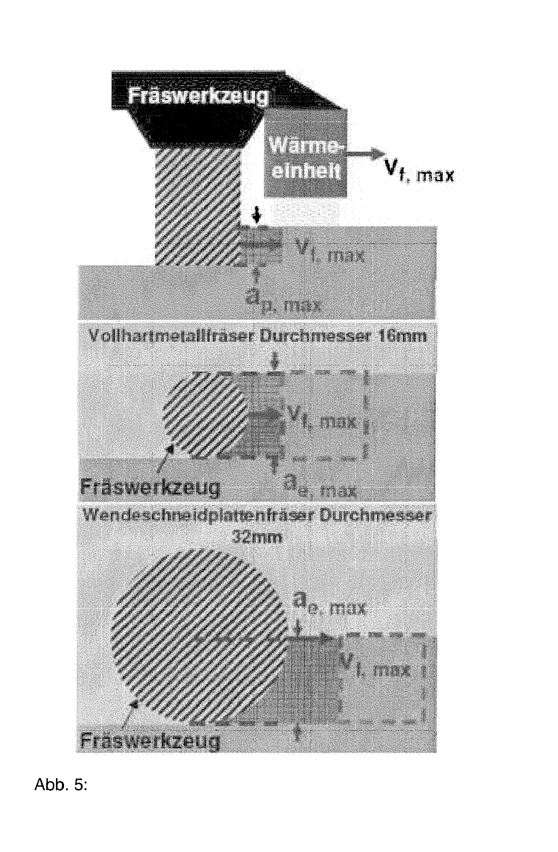

Abb. 5 zeigt eine typische Anwendung der Erfindung und zwar für den Fall des Fräsens. Für das Werkstückmaterial Titan (Ti-6Al-4V) ist bei einem optimalen Bereich von Tₘₐₓ von 600°C und den weiteren Prozessparametern a_{p,max}=16mm, a_{e,max}=16mm (für einen Vollhartmetallfräser mit Durchmesser 16mm oder einen Wendeschneidplattenfräser des gleichen Durchmessers, welcher aber nur zur Hälfte in das Material eintaucht), sowie bei V_{f,max}=16m/min mit einem Aufheizvolumen von 68267 mm³/s gerechnet werden. Typische Generatoren für solche Anwendungen sollten rund 250 kW Leistung aufweisen.

Nicht dargestellt ist eine bevorzugte Ausführungsform einer erfindungsgemäßen Vorrichtung umfassend ein Spanwerkzeug und diesem in Bearbeitungsrichtung vorgelagert, einen Induktor zur Erwärmung des zu bearbeitenden Werkstücks, sowie Temperaturerfassungs- und Vergleichsmittel (zur Bestimmung der Abweichung der Oberflächen-IST-Temperatur des zu erhitzenden Werkstücksteils vom Soll-Wert) zur Regelung der Vorschubgeschwindigkeit oder/und Frequenz der Magnetfeldänderung und/oder der Stromstärke der Magnetfeldänderung, welche vom Induktor ausgeht und/oder Frequenz der Rotation des spanenden Werkzeugs.

Ebenso nicht dargestellt ist eine ganz besonders bevorzugte Ausführungsform, welche mehrere, von einander beabstandete, aber dem Werkzeug in Vorschubrichtung vorgelagerte Induktoren umfasst. Zur Erhitzung des Werkstücks in verschiedenen Tiefen weisen diese verschiedene Frequenzen der Änderung des magnetischen Feldes auf. Besonders bevorzugt sind diese Induktoren räumlich so zueinander angeordnet, dass auch nicht direkt zugeordnete Oberflächen- und darunter liegende Bereiche von Werkstücken vor der Erfassung durch das Werkzeug, durch die zwar geringe aber vorhandene Wärmeleitung, erhitzt werden.

Nicht dargestellt ist ein besonders bevorzugtes Ausführungsbeispiel einer Vorrichtung zur erfindungsgemäßen Erhitzung eines Werkstücks durch Induktion, bei welchem der mindestens eine Induktor so ausgeführt ist, dass dieser die räumliche Form des abgebenen sich ändernden Magnetfeldes zeitlich zu ändern vermag, etwa durch Änderung der verwendeten Spulengeometrie. Im Falle von mehreren Induktoren ist der Effekt durch Änderung der relativen Anordnung der Induktoren einstellbar. Dadurch können thermische Schwankungen im Werkstück und damit Quellen von zeitlichen Schwankungen in der maximalen Vorschubgeschwindigkeit vermieden oder zumindest verringert werden.

Nicht dargestellt ist ein weiteres, besonders bevorzugtes Ausführungsbeispiel, bei welchem als Magnetfeldkonzentratoren -zugeordnet zu den Induktoren- solche mit zeitlich veränderlicher Permeabilität, wie z.B. Ferrofluide verwendet werden.

Das erfindungsgemäße Verfahren sieht nun vor, dass das Verfahren zum Zerspanen eines Werkstücks aus einer Titanlegierung oder einem Material mit ähnlicher oder geringerer Wärmeleitfähigkeit mit den folgenden zeitlich aufeinander folgenden Schritten erfolgt:
i) Erhitzen eines Teiles des zu bearbeitenden Werkstück durch elektromagnetische Induktion, d.h. durch Aussetzung von Teilen des Werkstücks eines sich ändernden magnetischen Feldes unter Erzeugung von Wirbelströmen in diesem Teil des Werkstücks
ii) spanabhebende Bearbeitung des unmittelbar zuvor erhitzten Teiles des zu bearbeitenden Werkstücks.

## Patentansprüche

1. Verfahren zum Zerspanen eines Werkstücks aus einer Titanlegierung oder einem Material mit ähnlicher oder geringerer Wärmeleitfähigkeit mit den zeitlich aufeinander folgenden Schritten
i) Erhitzen eines Teiles des zu bearbeitenden Werkstück durch elektromagnetische Induktion, d.h. durch Aussetzung von Teilen des Werkstücks eines sich ändernden magnetischen Feldes unter Erzeugung von Wirbelströmen in diesem Teil des Werkstücks
ii) spanabhebende Bearbeitung des unmittelbar zuvor erhitzten Teiles des zu bearbeitenden Werkstücks.

2. Verfahren nach Anspruch 1, **dadurch gekennzeichnet, dass** das Erhitzen durch relative Bewegung eines so genannten Induktors in geringem Abstand zur Oberfläche des zu erhitzenden Teiles des Werkstücks erfolgt, wobei die Geschwindigkeit der Relativbewegung im Wesentlichen der Bearbeitungsgeschwindigkeit der nachfolgenden spanabhebenden Bearbeitung entspricht.

3. Verfahren nach Anspruch 1 bis 2, **dadurch gekennzeichnet, dass** der Induktor in einem Abstand von rund 1 mm, bevorzugt 0,01 mm und besonders bevorzugt 0,001 mm oberhalb der Oberfläche des zu Werkstücks über dieses hinweg geführt.

4. Verfahren nach Anspruch 1 bis 3, **dadurch gekennzeichnet, dass** die relative Bewegung des Induktors geregelt und zwar in Abhängigkeit von der Energieaufnahme des Werkzeugs oder/und von dem Grad der Erhitzung des Werkstücks erfolgt.

5. Verfahren nach Anspruch 1 bis 4, **dadurch gekennzeichnet, dass** die relative Bewegung des Induktors und im Falle der festen Kopplung von Induktor zu Werkzeug, die Vorschubgeschwindigkeit des Werkzeugs im Bereich von 5-10, besonders bevorzugt über 10 m/min beträgt.

6. Vorrichtung zum Zerspanen eines Werkstücks aus einer Titanlegierung oder einem Material mit ähnlicher oder geringerer Wärmeleitfähigkeit, aufweisend eine Werkzeug geeignet zum Zerspanen, sowie eine zu bearbeitendes Werkstück, sowie eine Halterung für dieses, **dadurch gekennzeichnet, dass** die Vorrichtung, in Bewegungsrichtung der Bearbeitung, unmittelbar vor dem Werkzeug und mit geringem Abstand zum Werkstück angeordnet, einen so genannten Induktor, geeignet zur Erhitzung des Werkstücks durch elektromagnetische Induktion, aufweist.

7. Vorrichtung nach Anspruch 6, **dadurch gekennzeichnet, dass** die Vorrichtung Mittel zur Regelung der relativen Bewegung des Induktors zur Oberfläche des Werkstücks aufweist, welche so ausgeführt sind, dass die Relativbewegung in Abhängigkeit der Oberflächentemperatur des erhitzten Werkstückteiles oder/und in Abhängigkeit von der Energieaufnahme des Werkzeugs oder/und der Temperatur der Werkzeugoberfläche, regelbar ausgeführt ist.

8. Vorrichtung nach Anspruch 6 bis 7, **dadurch gekennzeichnet, dass** die Vorrichtung zwei oder mehrere Induktoren aufweist, welche in Bearbeitungsrichtung zu einander beabstandet und jeweils vor dem Werkzeug angeordnet sind, wobei jeder Induktor eine andere Frequenz der Magnetfeldänderung, geeignet zur unterschiedlich tiefen Erwärmung des Werkstücks, aufweist.

9. Vorrichtung nach Anspruch 6 bis 8, **dadurch gekennzeichnet, dass** die Vorrichtung magnetische Linsen, etwa in Form von Helmholtzspulen-Paaren oder/und zwei oder mehrere Induktoren aufweist, welche in Bearbeitungsrichtung zu einander beabstandet und jeweils vor dem Werkzeug angeordnet sind, wobei jeder Induktor eine andere Frequenz der Magnetfeldänderung, geeignet zur unterschiedlich tiefen Erwärmung des Werkstücks, aufweist.

10. Vorrichtung nach Anspruch 6 bis 9, **dadurch gekennzeichnet, dass** die Vorrichtung mehrere, gegeneinander bewegliche Induktoren aufweist, welche geeignet zur Ausbildung verschiedener Formen eines vorzuwärmenden Bereiches, etwa eines Dreiecks etc., ausgeführt sind oder solche vorgefertigten Induktoren in einem der Vorrichtung zugeordneten und im Betrieb erreichbaren Werkzeugmagazin aufweist.

11. Vorrichtung nach Anspruch 6 bis 10, **dadurch gekennzeichnet, dass** die Vorrichtung mindestens einen Induktor mit Magnetfeldkonzentrator aufweist, wobei der Konzentrator eine zeitlich veränderliche Permeabilität, etwa in Form einer Flüssigkeit oder in Form von mechanisch gegeneinander verschieblichen Teilsegmenten aufweist.
